# EUROPÄISCHE PATENTSCHRIFT

(11) **EP 1 117 574 B1**
(45) Veröffentlichungstag und Bekanntmachung des Hinweises auf die Patenterteilung: **30.11.2005**
(21) Anmeldenummer: 00952932.2
(22) Anmeldetag: 13.07.2000
(51) Int. Cl.: B60S 1/38

(54) **WISCHBLATT ZUM REINIGEN VON SCHEIBEN AN KRAFTFAHRZEUGEN**
WIPER BLADE FOR CLEANING VEHICLE WINDSCREEN
RACLETTE D'ESSUIE-GLACE DE VEHICULES AUTOMOBILES

(30) Priorität: 30.07.1999 DE 19935859
(43) Veröffentlichungstag der Anmeldung: 25.07.2001
(73) Patentinhaber: ROBERT BOSCH GMBH, 70442 Stuttgart (DE)
(72) Erfinder: WYNEN, Paul, B-1910 Neerpelt (BE); HERINCKX, Dirk, B-3350 Drieslinter (BE); ROEKENS, Jurgen, B-1820 Steenokkerseel (BE)
(86) Internationale Anmeldenummer: PCT/DE2000/002289
(87) Internationale Veröffentlichungsnummer: WO 2001/008947

(56) Entgegenhaltungen:
- EP-A- 0 635 411
- WO-A-94/20339
- DE-A- 4 410 446

## Beschreibung

### Stand der Technik

Die Erfindung geht von einem Wischblatt gemäß den Merkmalen des Oberbegriffs des Patentanspruchs 1 aus.

Bekannte Scheibenwischer besitzen einen Wischarm, der aus einem auf einer Antriebsachse befestigten Befestigungsteil, einem mit diesem über ein Kniegelenk verbundenen Gelenkteil und aus einer sich an das Gelenkteil starr anschließenden Wischstange aufgebaut ist. Ferner besitzt der Scheibenwischer ein Wischblatt, das ein Tragbügelsystem und eine von diesem gehaltene Wischleiste aufweist. Das Wischblatt ist am Wischarm angelenkt, indem ein hakenförmiges Ende der Wischstange zwischen zwei Seitenwangen des Tragbügelsystems greift und einen Gelenkbolzen umfaßt. Das so gebildete Gelenk führt das Wischblatt mit der Wischleiste über eine Kraftfahrzeugscheibe, wobei das Gelenkteil und das Tragbügelsystem es ermöglichen, daß sich die Wischleiste einer Wölbung der Kraftfahrzeugscheibe anpaßt. Ein erforderlicher Anpreßdruck der Wischleiste auf der Kraftfahrzeugscheibe wird mit mindestens einer Zugfeder erreicht, die das Befestigungsteil und das Gelenkteil gemeinsam mit der Wischstange über das Kniegelenk verspannt.

Die Wischleiste besteht aus einem Elastomer, z.B. einem Natur- oder Synthesekautschuk, oder aus Äthylenpropylen. Sie hat eine Kopfleiste, die über einen Kippsteg mit einer auf der zu wischenden Scheibe aufliegenden Wischlippe verbunden ist. Durch den Kippsteg kann die Wischlippe im Umkehrpunkt der Wischbewegung in die entgegengesetzte Richtung umklappen, so daß sie stets einen günstigen Winkel zur Windschutzscheibe einnimmt. Wird der Scheibenwischer betätigt, gleitet die Wischleiste mit der Wischlippe über die Kraftfahrzeugscheibe, wobei sie sich durch Reibung zwischen der Wischlippe und der Windschutzscheibe abnutzt. Ferner wirken Umwelteinflüsse auf die Wischleiste, wie beispielsweise Temperaturschwankungen, UV-Strahlung, Salzwasser, Abgase usw., die zu einer frühzeitigen Werkstoffalterung und einem verstärkten Verschleiß führen können.

Um sicher zu stellen, daß die Wischleiste in einwandfreiem Zustand ist, wenn ein neues Kraftfahrzeug ausgeliefert wird, ist bekannt, die Wischleiste mit einem Schutzprofil abzudekken, bevor das Kraftfahrzeug konserviert wird. Das Schutzprofil wird erst entfernt, wenn das neue Kraftfahrzeug nach einer Endkonservierung einem Käufer übergeben wird. Wird jedoch die Windschutzscheibe bei einer Zwischenlagerung des Kraftfahrzeugs, bei der Konservierung usw. verschmutzt oder ist die Sicht durch Regen behindert, kann die Windschutzscheibe nicht zum rangieren des Kraftfahrzeugs mit der Wischanlage des Fahrzeugs gereinigt werden. Das Schutzprofil ist steif, hart und liegt nur teilweise auf der Windschutzscheibe auf.

Aus der DE-A1-3 005 965 ist bekannt, an der der Windschutzscheibe zugewandten, abgerundeten Seite des Schutzprofils ein biegsames Band mit der Längskante zu befestigen. Das Schutzprofil besteht aus Hart-PVC und das Band aus Weich-PVC. Wird der Wischer betätigt, wird das Band über die Länge des Wischblatts mehr oder weniger umgelegt und ist dadurch in der Lage, sich in bestimmten Grenzen der Krümmung der Windschutzscheibe anzupassen. Das Band wirkt als Wischlippe, wodurch bei Rangiervorgängen die Wischanlage zur Reinigung der Windschutzscheibe genutzt werden kann, ohne die eigentliche Wischleiste des Wischblatts abzunutzen. Bei Konservierungsvorgängen des Kraftfahrzeugs wird jedoch das biegsame Band häufig hohen Temperaturen ausgesetzt. Das Band versprödet, die Elastizität wird reduziert, der Umlegevorgang behindert und die Wischqualität verschlechtert.

Ferner ist aus der DE-A1-4 410 446 eine Wischervorrichtung mit einem Schutzprofil bekannt, das mittels Extrusion hergestellt wird. Das Schutzprofil weist zwei in etwa v-förmig angeordnete Schenkel auf, die jeweils an ihrem einem biegsamen Band gegenüberliegenden Ende eine Längslippe aufweisen, die zur Innenseite des Schutzprofils hin verläuft, um ein Mittel zum Einhaken in Längsnuten der Wischleiste zu bilden. Die Längslippen ragen mit ihren Endabschnitten über die Länge der Wischleiste hinaus. Sie besitzen in ihren Endabschnitten Ausstülpungen, die zur Wischlippe vorspringen und das Schutzprofil in Längsrichtung auf der Wischleiste fixieren.

### Vorteile der Erfindung

Das Tragbügelsystem des Wischblatts nach Anspruch 1 ermöglicht, dass die Wischleiste Krümmungen der Windschutzscheibe anpassbar ist. Durch ein Schutzprofil, das aus einem elastischen Material gebildet ist, und sich durch elastische Verformung Krümmungen der windschutzscheibe weitgehend, vorzugsweise vollständig anpassen kann, wird die Funktion des bei steifen Schutzprofilen blockierten Tragbügelsystems für das Schutzprofil nutzbar. Das am Schutzprofil mit einer Grundseite befestigt Wischelement liegt während der Wischbewegung gleichmäßig über die Länge des Wischblatts auf der Windschutzscheibe auf und es kann eine gute Wischqualität erreicht werden. Ein Umlegen des wischelements wird zur Anpassung an die Windschutzscheibe nicht benötigt. Statt einer hohen dünnen Lippe, die bei Wärmeeinwirkung schnell versprödet, kann ein Wischelement verwendet werden, das eine nahezu quadratische, trapezförmige oder eine dreieckige Querschnittsfläche aufweist. Das Wischelement ist durch die Materialanhäufung gegen Umwelteinflüsse und insbesondere Wärmeeinwirkung widerstandsfähig und behält im Wesentlichen seine Eigenschaften. Grundsätzlich kann jedoch das Umlegen eines hohen Wischelements und/oder das plastische und elastische Verformen des Wischelements unterstützend zum elastisch verformbaren Schutzprofil genutzt werden, das Wischelement Krümmungen der Windschutzscheibe besser anzupassen. Vorzugsweise ist das Wischelement aus einem thermoplastischen Elastomer, d.h. aus einer Verbindung von einem Thermoplasten und einem Elastomer. Mit einer derartigen Kombination können besonders wärmebeständige Materialien erreicht werden, die sich durch plastische und elastische Verformung Krümmungen von Windschutzscheiben gut anpassen können. Trotz Wärmebehandlung mit hohen Temperaturen bzw. einer Konservierung des Kraftfahrzeugs kann eine gute Wischqualität mit dem Wischelement erzielt werden.

Das Widerstandsmoment des Schutzprofils und die Fähigkeit, sich bei der Wischbewegung unterschiedlichen Krümmungen der Windschutzscheibe anzupassen ist vom Material und von der Querschnittsgeometrie des Schutzprofils abhängig. Das Schutzprofil besteht vorzugsweise aus elastischem Kunststoff, wie insbesondere aus Polypropylen, das bei hohen Temperaturen elastisch verformbar bleibt, bis zu ca. 80°C. Kunststoff ist kostengünstig, leicht und kann gut verarbeitet werden. Grundsätzlich kann das Schutzprofil jedoch auch teilweise oder vollständig aus Metall gefertigt werden.

Das Schutzprofil besitzt ein rohr- oder hülsenförmiges, langestrecktes Profil, das mit zwei Seitenwangen die Wischleiste umgibt und mit krallenartigen Ansätzen an der Wischleiste oder am Wischblatt befestigt ist. In einer Ausgestaltung der Erfindung wird eine Querschnittsgeometrie vorgeschlagen, bei der sich das Profil von der Wischleiste in Richtung Windschutzscheibe verjüngt und jede Seitenwange ein oder mehrere, vorzugsweise zwei Wendepunkte aufweist. Die Wendepunkte bilden Ansatzpunkte für eine elastische Verformung, wodurch diese begünstigt wird. Ferner wird die elastische Verformbarkeit durch ein zur Windschutzscheibe abgerundetes, vorzugsweise birnenförmiges Profil und durch eine Wandstärke kleiner als 0,8 mm unterstützt.

Um das Schutzprofil verliersicher am Wischblatt zu befestigen und die Wischleiste seitlich von Umwelteinflüssen zu schützen, ist es bekannt, das Schutzprofil seitlich zu verschweißen. Das Schutzprofil wird hierfür an den seitlichen Stirnseiten erwärmt und gegen eine Platte gedrückt. Es entsteht eine Materialplatte, die das Schutzprofil verschließt, jedoch dieses zudem versteift. In einer Ausgestaltung wird vorgeschlagen, das Schutzprofil in Längsrichtung zumindest an einem Ende mit einem Deckel zu verschließen, mit dem das Schutzprofil zur Montage und Demontage vorteilhaft mehrfach geöffnet und geschlossen werden kann. Der Deckel kann auf das Schutzprofil aufgesteckt und über eine lösbare kraft- und/oder formschlüssige Verbindung am Schutzprofil befestigt sein. Ferner kann der Deckel verliersicher mit dem Schutzprofil verbunden und über Rastmittel in einer Schließstellung und/oder in einer Öffnungsstellung fixierbar sein, beispielsweise bei einem Deckel, der über ein Gelenk mit dem Schutzprofil verliersicher verbunden ist, durch eine Drehbewegung oder bei einem Deckel, der über eine Schiene mit dem Schutzprofil verbunden ist, durch eine geradlinige Bewegung usw.

Die Montage und Demontage des Schutzprofils wird mit dem erfindungsgemäßen Deckel erleichtert und insbesondere kann mit einem Deckel eine Versteifung des Schutzprofils seitlich weitgehend vermieden und die elastische Verformbarkeit beibehalten werden, beispielsweise indem der Deckel mit Spiel befestigt, in Grenzen verschiebbar ist und/oder nur teilweise am Schutzprofil anliegt. Ferner kann die elastische Verformbarkeit beibehalten werden, indem nicht die gesamte Stirnseite zu einer Materialplatte umgeformt wird, sondern das Schutzprofil mit einem quer zur Längsrichtung nach innen gerichteten Vorsprung verschlossen ist, der in eine Seitenwange des Schutzprofils angeformt ist. Der Vorsprung wird beispielsweise durch eine Wärmequelle oder vorzugsweise durch eine Ultraschallquelle eingebracht.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: einen Ausschnitt eines Wischblatts,
- Fig. 2: einen Schnitt entlang der Linie II-II in Fig. 1,
- Fig. 3-5: Varianten eines Schutzprofils nach Fig. 2,
- Fig. 6: einen vergrößerten Ausschnitt VI in Fig. 1,
- Fig. 7: einen Schnitt entlang der Linie VII-VII in Fig. 6,
- Fig. 8: einen Deckel,
- Fig. 9: einen Schnitt entlang der Linie IX-IX in Fig. 8,
- Fig. 10: eine Variante eines Schutzprofils nach Fig. 1,
- Fig. 11: einen Schnitt entlang der Linie XI-XI in Fig. 10 und
- Fig. 12: einen Schnitt entlang der Linie XII-XII in Fig. 10.

### Beschreibung der Ausführungsbeispiele

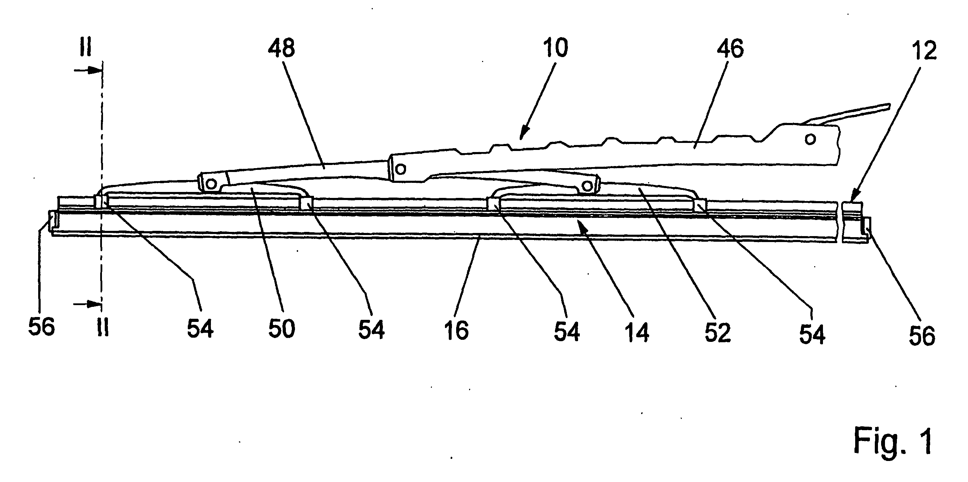

Fig. 1 zeigt einen Ausschnitt eines Wischblatts, das ein Tragbügelsystem 10 aufweist mit einem Hauptbügel 46, der gelenkig mit Zwischenbügeln 48 verbunden ist, an dessen Enden Krallenbügel 50, 52 angelenkt sind. In Haltekrallen 54 der Krallenbügel 50, 52 ist eine Wischleiste 12 befestigt. Um die Wischleiste 12 gegen Wärme und sonstige Umwelteinflüsse vor der Auslieferung an einen Käufer zu schützen, ist diese mit einem Schutzprofil 14 umgeben, an dem zur Windschutzscheibe ein Wischelement 16 befestigt ist.

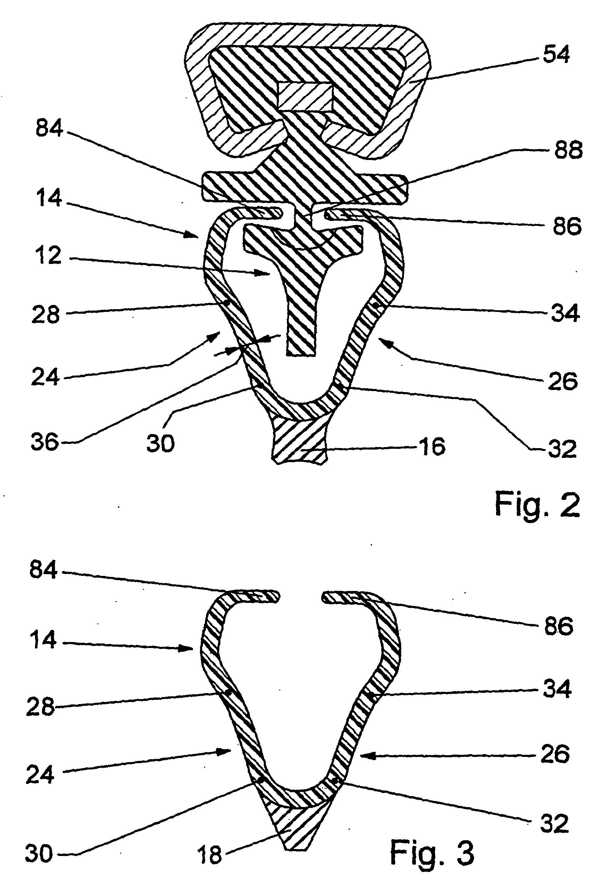

Das Schutzprofil 14 ist aus einem elastischen Kunststoff, und zwar aus Polypropylen und ist durch elastische Verformung Krümmungen der Scheibe anpaßbar. Das Schutzprofil 14 weist ein langgestrecktes Hohlprofil mit zwei die Wischleiste 12 umgebenden Seitenwangen 24, 26 auf, das mit krallenartigen Ansätzen 84, 86 an der Wischleiste 12 im Bereich eines Kippstegs 88 befestigt ist und sich von der Wischleiste 12 in Richtung Windschutzscheibe verjüngt (Fig. 2). Jede Seitenwange 24, 26 besitzt zwei Wendepunkte 28, 30, 32, 34, die Ansatzstellen für eine elastische Verformung bilden und diese begünstigen. Möglich sind auch mehrere Wendepunkte, beispielsweise gewellte Seitenwangen. Ferner ist die elastische Verformbarkeit durch ein zur Windschutzscheibe abgerundetes, insgesamt birnenförmiges Profil und durch eine Wandstärke 36 kleiner als 0,8 mm unterstützt. Die Wandstärke 36 ist vorteilhaft im dargestellten Ausführungsbeispiel gleichbleibend 0,6 mm, kann jedoch variiert werden.

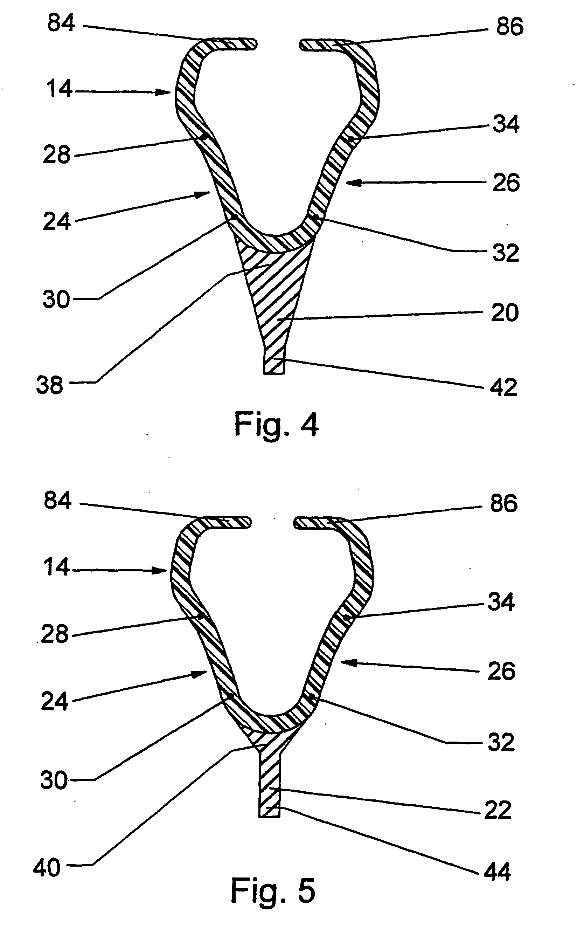

Während das Schutzprofil 14 extrudiert wird, wird gleichzeitig das Wischelement 16 an das Schutzprofil 14 extrudiert, so daß das Wischelement 16 über eine chemische Verbindung am Schutzprofil 14 befestigt ist. Durch dieses Verfahren wird ohne besonderen Aufwand eine gute Verbindung erzielt. Möglich ist jedoch, das Schutzprofil und das Wischelement kraftschlüssig, formschlüssig und/oder stoffschlüssig zu verbinden, beispielsweise durch Stecken, Kleben, Schweißen usw. Das Wischelement 16 ist aus einem thermoplastischen Elastomer, d.h. aus einer Verbindung von einem Thermoplasten und einem Elastomer. Das Wischelement 16 besitzt eine nahezu quadratische Querschnittsfläche und ist aufgrund der Materialanhäufung widerstandsfähig gegen Umwelteinflüsse und insbesondere Wärmeeinwirkung. Ein gleicher Effekt wird mit einem trapezförmigen Wischelement 18 erreicht, wie in Fig. 3. In den Fig. 4 und 5 sind Schutzprofile 14 mit Wischelementen 20, 22 dargestellt, die sich auf der dem Schutzprofil 14 zugewandten Seite aus einem trapezförmigen Bereich 38, 40 und auf der der Windschutzscheibe zugewandten Seite aus einem rechteckigen Bereich 42, 44 zusammensetzen. Beide Wischelemente 20, 22 sind hoch ausgeführt, so daß beim Wischen über die Windschutzscheibe deren Umlegevorgang günstig zur Anpassung an Krümmungen der Windschutzscheibe genutzt werden kann, zusätzlich zur elastischen Verformung des Schutzprofils 14. Gleichbleibende Bauteile werden grundsätzlich mit den gleichen Bezugszeichen beziffert. Mit dem trapezförmigen Bereich 38, 40, der in Fig. 4 höher als in Fig. 5 ausgeführt ist, wird eine große Verbindungsfläche zwischen dem Schutzprofil 14 und dem Wischelement 20 und 22 erreicht und eine sichere Verbindung ermöglicht. Ferner wird in oberen, durch Biegespannungen stärker belasteten Bereichen eine hohe Wärmebeständigkeit erzielt.

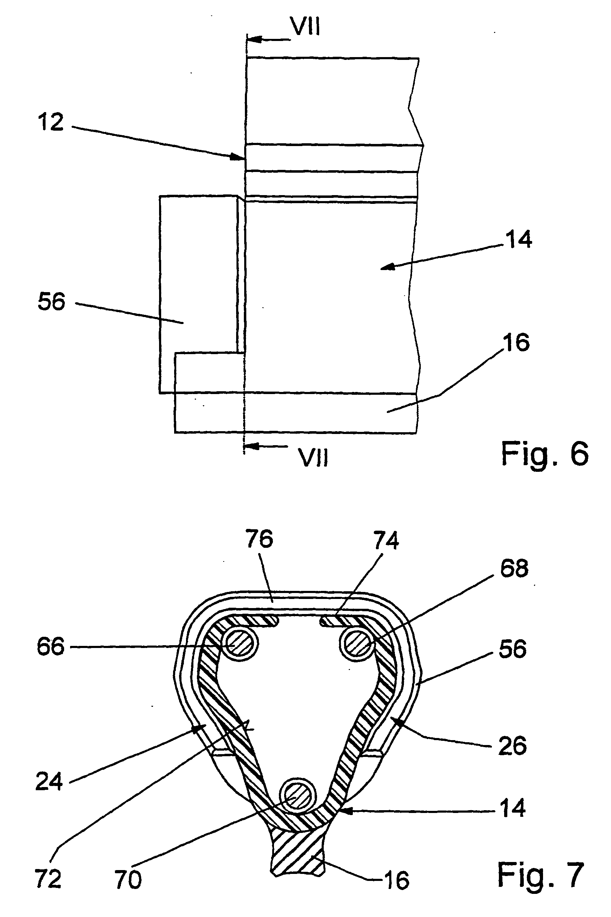

Fig. 6 zeigt einen vergrößerten Ausschnitt VI in Fig. 1. Das Schutzprofil 14 ist in Längsrichtung an beiden Enden mit einem Kunststoffdeckel 56 verschlossen. Der Deckel 56 ist auf das Schutzprofil 14 aufgesteckt und mit diesem kraftschlüssig über drei an der Innenseite 72 des Schutzprofils 14 anliegenden Zapfen 66, 68, 70 und über einen auf einer Deckseite 74 des Schutzprofils 14 aufliegenden Bund 76 lösbar verbunden (Fig. 7, 8 und 9). Das Schutzprofil 14 ist verliersicher am Wischblatt befestigt, die Wischleiste 12 ist seitlich von Umwelteinflüssen geschützt und das Schutzprofil 14 ist mit den Deckeln 56 leicht zu montieren und zu demontieren. Insbesondere kann ein beidseitig verschlossenes Schutzprofil 14 mit zumindest einem Deckel 56 nach der Demontage wiederverwendet werden. Ferner wird durch den Deckel 56 die Elastizität des Schutzprofils 14 nur unwesentlich beeinflußt, der nur teilweise an diesem anliegt. Die Seitenwangen 24, 26 können bei einer elastischen Verformung des Schutzprofils 14 nach innen ausweichen, ohne vom Deckel 56 behindert zu werden (Fig. 7).

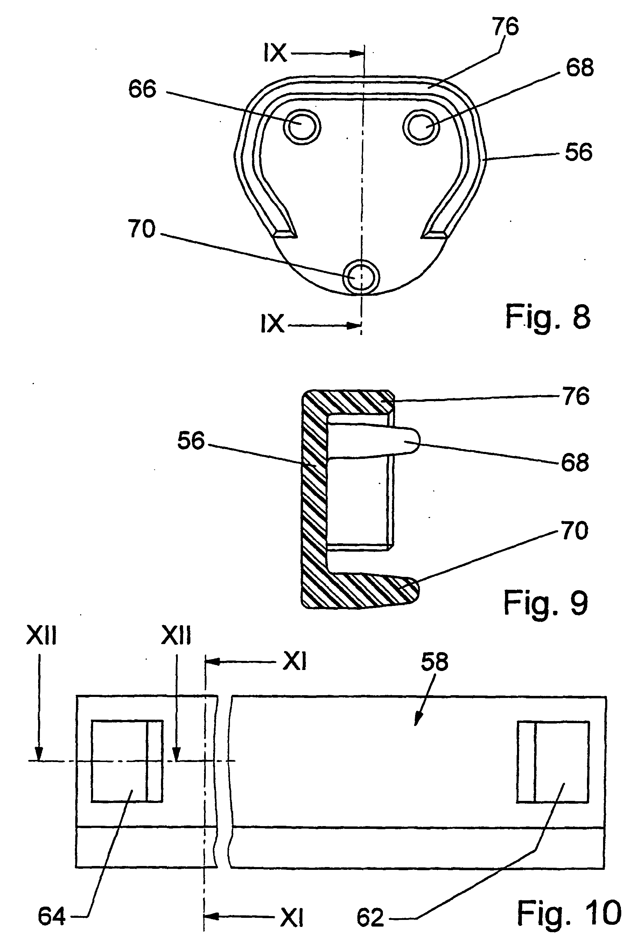

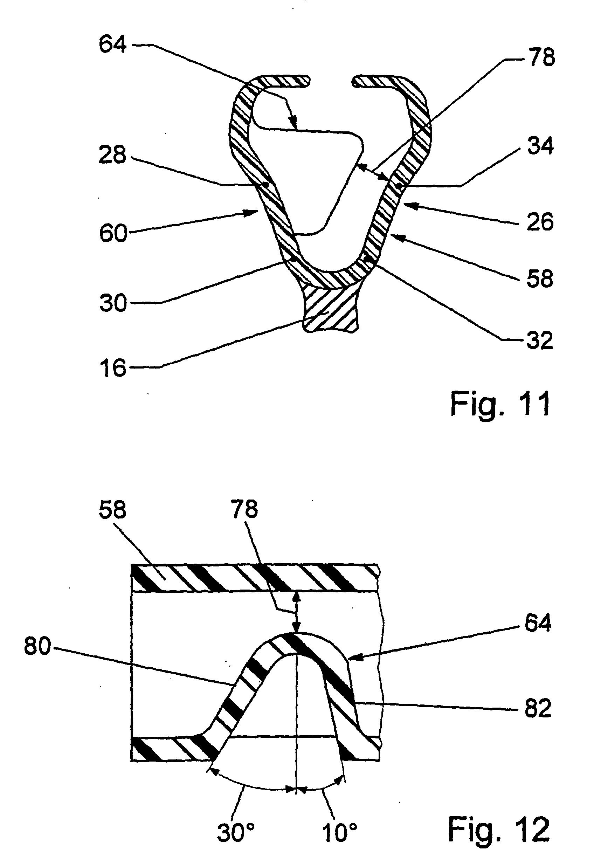

In Fig. 10, 11 und 12 ist ein Schutzprofil 58 dargestellt, dessen Enden mit quer zur Längsrichtung nach innen gerichteten Vorsprüngen 62, 64 verschlossen sind. Die Vorsprünge 62, 64 sind vorzugsweise mit einer Ultraschallquelle in eine Seitenwange 60 des Schutzprofils 58 eingebracht. Die Länge des Vorsprungs 62, 64 nimmt in Richtung Windschutzscheibe ab, daß ein in etwa gleichbleibender Spalt 78 zwischen dem Vorsprung 62, 64 und der Seitenwange 26 entsteht, durch den die Wischleiste 12 bei der Montage und der Demontage zerstörungsfrei führbar ist (Fig. 11). Die Vorsprünge 62, 64 verjüngen sich quer zur Längsrichtung und besitzen zur Stirnseite eine in Längsrichtung nach innen geneigte erste flachere Schräge 80 von 30°, die die Wischleiste 12 bei der Montage in Richtung des Spalts 78 lenkt und die Montage erleichtert (Fig. 12). Ferner besitzen die Vorsprünge 62, 64 in Längsrichtung zur Innenseite eine zweite nach außen geneigte, steilere Schräge 82, von 10°, die einen festen Halt des Schutzprofils 58 während des Betriebs des Wischers auf der Wischleiste 12 sicherstellt und eine zerstörungsfreie Demontage erleichtert.

Durch die Vorsprünge 62, 64 ist das Schutzprofil 58 verliersicher und wiederverwendbar am Wischblatt befestigt und die Wischleiste 12 ist seitlich gegen Umwelteinflüsse geschützt. Die Vorsprünge 62, 64 erstrecken sich nur über einen kleinen Teil des Umfangs des Schutzprofils 58, so daß die elastische Verformbarkeit nur unwesentlich beeinträchtigt wird.

### Bezugszeichen

- 10: Tragbügelsystem
- 12: Wischleiste
- 14: Schutzprofil
- 16: Wischelement
- 18: Wischelement
- 20: Wischelement
- 22: Wischelement
- 24: Seitenwange
- 26: Seitenwange
- 28: Wendepunkt
- 30: Wendepunkt
- 32: Wendepunkt
- 34: Wendepunkt
- 36: Wandstärke
- 38: Bereich
- 40: Bereich
- 42: Bereich
- 44: Bereich
- 46: Hauptbügel
- 48: Zwischenbügel
- 50: Krallenbügel
- 52: Krallenbügel
- 54: Haltekralle
- 56: Deckel
- 58: Schutzprofil
- 60: Seitenwange
- 62: Vorsprung
- 64: Vorsprung
- 66: Zapfen
- 68: Zapfen
- 70: Zapfen
- 72: Innenseite
- 74: Deckseite
- 76: Bund
- 78: Spalt
- 80: Schräge
- 82: Schräge
- 84: Ansatz
- 86: Ansatz
- 88: Kippsteg

## Patentansprüche

1. Wischblatt zum Reinigen von Scheiben an Kraftfahrzeugen mit einer von einem Tragbügelsystem (10) gehaltenen Wischleiste (12), die von einem hohlen Schutzprofil (14, 58) mit zwei Seitenwangen (24, 26, 60) umgeben ist, das sich von der Wischleiste (12) in Richtung zur Scheibe hin verjüngt und an dem an der zur Scheibe gewandten, abgerundeten Seite ein Wischelement (16, 18, 20, 22) befestigt ist wobei das Wischelement (16, 18) einen dreieckigen, trapezförmigen oder nahezu quadratischen Querschnitt aufweist, **dadurch gekennzeichnet, dass** das Schutzprofil (14, 58) aus Polypropylen gebildet und durch elastische Verformung Krümmungen der Scheibe -weitgehend anpassbar ist.

2. Wischblatt nach Anspruch 1, **dadurch gekennzeichnet, dass** das Wischelement (16, 18, 20, 22) aus einem thermoplastischen Elastomer ist.

3. Wischblatt nach einem der vorhergehenden Ansprüche, **dadurch gekennzeichnet, dass** das Schutzprofil (14, 58) eine Wandstärke (36) kleiner als 0,8 mm, vorzugsweise von 0,6 mm, aufweist und jede Seitenwange (24, 26, 60) zwei Wendepunkte (28, 30, 32, 34) besitzt.

4. Wischblatt nach einem der vorhergehenden Ansprüche, **dadurch gekennzeichnet, dass** das Schutzprofil (14) in Längsrichtung zumindest an einem Ende mit einem Deckel (56) verschlossen ist, mit dem das Schutzprofil (14) geöffnet und geschlossen werden kann.

5. Wischblatt nach einem der vorhergehenden Ansprüche, **dadurch gekennzeichnet, dass** das Schutzprofil (58) zumindest an einem Ende mit einem quer zur Längsrichtung nach innen gerichteten Vorsprung (62, 64) verschlossen ist, der in einer Seitenwange (60) des Schutzprofils (58) angeformt ist und zur gegenüberliegenden Seitenwange (26) hin einen Spalt (78) lässt.

6. Wischblatt nach Anspruch 5, **dadurch gekennzeichnet, dass** der Vorsprung (62, 64) durch eine Wärmequelle oder eine Ultraschallquelle in die Saitenwange (60) eingebracht wird.

## Claims

1. Wiper blade for cleaning vehicle windscreens, with a wiper strip (12), which is held by a supporting-bracket system (10) and is surrounded by a hollow protective profile (14, 58) having two side cheeks (24, 26, 60), which protective profile tapers from the wiper strip (12) in the direction towards the windscreen and to which a wiper element (16, 18, 20, 22) is fastened on the rounded side facing the windscreen, the wiper element (16, 18) having a triangular, trapezoidal or virtually square cross section, **characterized in that** the protective profile (14, 58) is formed from polypropylene and can be substantially matched by means of elastic deformation to curvatures of the windscreen.

2. Wiper blade according to Claim 1, **characterized in that** the wiper element (16, 18, 20, 22) is composed of a thermoplastic elastomer.

3. Wiper blade according to one of the preceding claims, **characterized in that** the protective profile (14, 58) has a wall thickness (36) of less than 0.8 mm, preferably of 0.6 mm, and each side cheek (24, 26, 60) has two turning points (28, 30, 32, 34).

4. Wiper blade according to one of the preceding claims, **characterized in that** the protective profile (14) is closed in the longitudinal direction at least at one end by a cover (56) with which the protective profile (14) can be opened and closed.

5. Wiper blade according to one of the preceding claims, **characterized in that** the protective profile (58) is closed at at least one end by a projection (62, 64) which is directed inwards transversely to the longitudinal direction, is integrally formed in one side cheek (60) of the protective profile (58) and leaves a gap (78) to the opposite side cheek (26).

6. Wiper blade according to Claim 5, **characterized in that** the projection (62, 64) is introduced into the side cheek (60) by means of a heat source or an ultrasound source.

## Revendications

1. Balai d'essuie-glace de véhicule automobile comportant une lame d'essuyage (12) tenue par un système de palonniers (10), cette lame étant entourée par un profilé protecteur creux (14, 58) ayant deux flancs (24, 26, 60), allant en diminuant à partir de la lame d'essuyage (12) en direction de la vitre et dont le côté arrondi tourné vers la vitre porte un élément d'essuyage (16, 18, 20, 22),
cet élément d'essuyage (16, 18) ayant une section triangulaire trapézoidale ou sensiblement carrée,
**caractérisé en ce que**
le profilé protecteur (14, 58) est réalisé en polypropylène et s'adapte dans une très large mesure à la courbure de la vitre par déformation élastique.

2. Balai d'essuie-glace selon la revendication 1,
**caractérisé en ce que**
l'élément d'essuyage (16, 18, 20, 22) est en un élastomère thermoplastique.

3. Balai d'essuie-glace selon l'une des revendications précédentes,
**caractérisé en ce que**
le profilé protecteur (14, 58) a une épaisseur de paroi (36) inférieure à 0,8 mm et de préférence égale à 0,6 mm et chaque flanc (24, 26, 60) possède deux points d'inversion (28, 30, 32, 34).

4. Balai d'essuie-glace selon l'une quelconque des revendications précédentes,
**caractérisé en ce que**
le profilé protecteur (14) est fermé dans la direction longitudinale au moins à une extrémité par un chapeau (56) permettant d'ouvrir et de fermer le profilé protecteur (14).

5. Balai d'essuie-glace selon l'une quelconque des revendications précédentes,
**caractérisé en ce que**
le profilé protecteur (58) est fermé à au moins une extrémité par une partie en saillie (62, 64) dirigée vers l'intérieur transversalement à la direction longitudinale, cette partie en saillie étant formée sur un flanc (60) du profilé protecteur (58) et laissant un intervalle (78) par rapport au flanc opposé (26).

6. Balai d'essuie-glace selon la revendication 5,
**caractérisé en ce que**
la partie en saillie (62, 64) est réalisée dans le flanc (60) avec une source de chaleur ou une source d'ultrasons.
